# EUROPÄISCHE PATENTSCHRIFT

(11) **EP 3 012 932 B1**
(45) Veröffentlichungstag und Bekanntmachung des Hinweises auf die Patenterteilung: **03.01.2018**
(21) Anmeldenummer: 15306565.1
(22) Anmeldetag: 06.10.2015
(51) Int. Cl.: H02G 3/12

(54) **BEFESTIGUNGSVORRICHTUNG ZUM FESTLEGEN EINER TRÄGERANORDUNG EINER TÜRKOMMUNIKATIONSEINRICHTUNG IN EINEM EINBAUGEHÄUSE**
ATTACHMENT DEVICE FOR SECURING A SUPPORT ASSEMBLY OF A DOOR COMMUNICATION DEVICE IN A FLUSH-MOUNTED HOUSING
DISPOSITIF DE FIXATION DESTINÉ À FIXER UN AGENCEMENT DE SUPPORT D'UN DISPOSITIF DE COMMUNICATION DE PORTE DANS UN BOÎTIER DE MONTAGE

(30) Priorität: 07.10.2014 DE 102014220307
(43) Veröffentlichungstag der Anmeldung: 27.04.2016
(73) Patentinhaber: Berker GmbH & Co. KG, 58579 Schalksmühle (DE)
(72) Erfinder: KLAUER, Wilfried, 58091 HAGEN (DE); RICHTER, Michael, 58579 SCHALKSMÜHLE (DE)
(74) Vertreter: Nuss, Laurent

(56) Entgegenhaltungen:
- EP-A2- 2 312 713
- DE-B3-102013 110 460
- DE-U1- 9 421 995

## Beschreibung

Die Erfindung betrifft eine Befestigungsvorrichtung zum Festlegen einer Trägeranordnung einer Türkommunikationseinrichtung in einem Einbaugehäuse.

Derartige Türkommunikationseinrichtungen sind zur Bedienung der Klingel bzw. Türsprechanlage eines Gebäudes vorgesehen. Solche Türkommunikationsgeräte können bei Bedarf auch mit einer Kameraanlage ausgerüstet sein. Die Betätigung solcher Türkommunikationseinrichtungen kann zum Beispiel durch das Verstellen eines beispielsweise als Taste, Wippe usw. ausgebildeten Betätigungsgliedes erfolgen, wobei die Funktionsstellungen zum Beispiel tastend ausgeführt sein können. Zur Betätigung kann auch ein sogenannter Touchscreen Verwendung finden. Oftmals sind solche Türkommunikationseinrichtungen zur Installation in Einbaugehäusen vorgesehen, wobei die zur Verwendung kommenden Befestigungsvorrichtungen, wie zum Beispiel Spreizkrallen, Schraubverbindungen usw. dafür vorgesehen sind, eine einfache Festlegung und bei Bedarf eine einfache Entnahme solcher Türkommunikationseinrichtungen zu ermöglichen.

Aus DE 10 2013 110 460 ist eine Türkommunikationseinrichtung mit einer Trägeranordnung bekannt. Die Trägeranordnung ist mittels eines Befestigungselements in einem Einbaugehäuse festgelegt. Das Befestigungselement umfasst ein erstes Rastmittel und eine zweites Rastmittel, das mit dem ersten Rastmittel zusammenwirkt, um die Trägeranordnung in dem Einbaugehäuse festzulegen.

Der Vorliegenden Erfindung liegt die Aufgabe zugrunde, eine Befestigungsvorrichtung vorzuschlagen, die ein einfaches und sicheres Verbinden einer Trägeranordnung einer Türkommunikationseinrichtung mit einem Einbaugehäuse sowie ein einfaches und sicheres Lösen der Trägeranordnung von dem Einbaugehäuse ermöglicht.

Erfindungsgemäß wird die Aufgabe durch eine Befestigungsvorrichtung gelöst, die ein erstes Befestigungselement, welches eine im Wesentlichen flächig ausgebildete Basis aufweist und an einer Befestigungsfläche des Einbaugehäuses festlegbar ist, und ein zweites Befestigungselement, welches an der Trägeranordnung festlegbar ist und welches zur Befestigung der Trägeranordnung in dem Einbaugehäuse durch Verschieben des zweiten Befestigungselements in einer Montagerichtung mit dem ersten Befestigungselement verbindbar ist, aufweist. Erfindungsgemäß erstreckt sich die Basis im Wesentlichen entlang einer parallel zur Montagerichtung verlaufenden Ebene. Erfindungsgemäß weist das erste Befestigungselement wenigstens eine Vertiefung und das zweite Befestigungselement wenigstens einen Vorsprung auf, der zur Verbindung des ersten Befestigungselements mit dem zweiten Befestigungselement in die Vertiefung formschlüssig eingreift. Erfindungsgemäß weist das erste Befestigungselement wenigstens eine Aufnahmeeinrichtung zur Aufnahme einer in Montagerichtung komprimierbaren Entriegelungsfeder auf, wobei durch die Entriegelungsfeder eine Entriegelungkraft entgegen der Montagerichtung auf die Trägeranordnung ausübbar ist.

Vorzugsweise verläuft die Montagerrichtung orthogonal zu einer Ebene, in welcher eine Einbauöffnung des Einbaugehäuses liegt. Die Einbauöffnung dient zur zumindest teilweisen Aufnahme der Trägeranordnung.

Vorzugsweise ist die Entriegelungsfeder als Druckfeder, insbesondere als Spiraldruckfeder ausgebildet.

Durch die erfindungsgemäße Befestigungsvorrichtung werden eine einfache und sichere Montage der Trägeranordnung an dem Einbaugehäuse sowie ein einfaches und sicheres Lösen der Trägeranordnung von dem Einbaugehäuse ermöglicht. Die durch die Entriegelungsfeder ausgeübte Entriegelungskraft erleichtert das Lösen der Trägeranordnung von dem Einbaugehäuse entgegen der Montagerichtung.

Vorzugsweise umfasst die Befestigungsvorrichtung eine Entriegelungsfeder, die in der Aufnahmeeinrichtung aufgenommen ist und durch die die Entriegelungkraft entgegen der Montagerichtung auf die Trägeranordnung ausübbar ist.

In einer bevorzugten Ausgestaltung weist das erste Befestigungselement wenigstens einen Festlegeabschnitt auf, der an der Basis angeordnet ist und mittels dem das erste Befestigungselement an der Befestigungsfläche in einer Festlegeposition formschlüssig und/oder kraftschlüssig festlegbar ist, wobei die Festlegeposition zwischen einer Minimalposition und einer Maximalposition entlang einer parallel zur Montagerichtung verlaufenden Achse stufenlos wählbar ist.

Durch diese Ausgestaltung wird der Einbau der Trägeranordnung in dem Einbaugehäuse, insbesondere ein Unterputzeinbaugehäuse erleichtert. Durch diese Ausgestaltung kann in einfacher Weise ein Putzausgleich erreicht werden.

Vorzugsweise umfasst der Festlegeabschnitt ein sich im Wesentlichen entlang der Montagerichtung erstreckendes Langloch.

Durch diese Ausgestaltung kann die Befestigung des ersten Befestigungselements an der Befestigungsfläche in einfacher Weise, beispielsweise mittels eines Festlegungselements, insbesondere einer Schraube mit Mutter erzielt werden.

In einer bevorzugten Ausgestaltung umfasst der Festlegeabschnitt wenigstens eine Durchführungsöffnung, in welche das Langloch mündet.

Die Durchführungsöffnung dient zum Durchführen des Festlegungselements, insbesondere eines Kopfes der Schraube und/oder der Mutter. Durch diese Ausgestaltung kann das erste Befestigungselement von dem Einbaugehäuse getrennt werden, beziehungsweise mit dem Einbaugehäuse verbunden werden, ohne dass die Schraube und/oder die Mutter von dem Einbaugehäuse gelöst werden muss.

Vorzugsweise ist das Langloch und/oder die Durchführungsöffnung an der Basis angeordnet.

Vorzugsweise weist die Vertiefung wenigstens eine erste Rastfläche und der Vorsprung wenigstens eine zweite Rastfläche auf, wobei zur Verbindung des ersten Befestigungselements mit dem zweiten Befestigungselement die erste Rastefläche auf der zweiten Rastfläche aufliegt, wobei vorzugsweise sich die erste Rastfläche und die zweite Rastfläche im Wesentlichen quer zur Montagerichtung erstrecken.

Diese Ausgestaltung ermöglicht ein einfaches und sicheres formschlüssiges Verbinden des ersten Befestigungselements mit dem zweiten Befestigungselement.

In einer bevorzugten Ausgestaltung weist das erste Befestigungselement wenigstens einen Haken zur Aufnahme eines mit einer Halterung der Trägeranordnung verbindbaren Haltebandes auf, wobei vorzugsweise der Haken an der Basis angeordnet ist.

Durch diese Ausgestaltung kann die Trägeranordnung mittels des Haltebandes in einer Verkabelungsposition gehalten werden, in welcher das Verbinden von Kabeln mit der Türkommunikationseinrichtung erleichtert wird.

Vorzugsweise umfasst das zweite Befestigungselement wenigstens eine mit dem Vorsprung verbundene Entriegelungsfläche, die sich vorzugsweise parallel zur Ebene erstreckt.

Diese Ausgestaltung erleichtert das Entriegeln der Befestigungsvorrichtung. Dadurch wird ein einfaches Lösen der Trägeranordnung von dem Einbaugehäuse ermöglicht.

In einer bevorzugten Ausgestaltung umfasst das erste Befestigungselement wenigstens eine Aussparung zur Durchführung von elektrischen Leitungen der Türkommunikationseinrichtung.

Diese Ausgestaltung erleichtert die Verkabelung der Türkommunikationseinrichtung, insbesondere in der Verkabelungsposition.

Vorzugsweise umfasst das erste Befestigungselement wenigstens einen Montageanschlag, der an eine Kante der Befestigungsfläche anlegbar ist, wenn die Festlegeposition an der Minimalposition gewählt ist.

Durch diese Ausgestaltung kann das erste Befestigungselement in einfacher Weise in der Minimalposition durch Anlegen des Montageanschlags an der Kante positioniert werden.

In einer bevorzugten Ausgestaltung umfasst das erste Befestigungselement wenigstens eine Entriegelungsausnehmung zur Durchführung einer Entriegelungseinrichtung in einer quer zur Ebene verlaufenden Entriegelungsrichtung, wobei vorzugsweise die Entriegelungsausnehmung benachbart zur Vertiefung angeordnet ist.

Durch diese Ausgestaltung wird ein Entriegeln der Befestigungsvorrichtung erleichtert.

Vorzugsweise umfasst die Befestigungsvorrichtung eine Entriegelungseinrichtung, die geeignet ist, in Entriegelungsrichtung zumindest teilweise durch die Entriegelungsausnehmung geführt zu werden, um zur Lösung der Verbindung zwischen dem ersten Befestigungselement und dem zweiten Befestigungselement eine Kraft auf den Vorsprung und/oder die Entriegelungsfläche auszuüben.

Durch diese Ausgestaltung wird ein Entriegeln der Befestigungsvorrichtung erleichtert. Erfindungsgemäß umfasst das erste Befestigungselement wenigstens eine Halteeinrichtung zur formschlüssigen Aufnahme einer Auflageeinrichtung, wobei die Halteeinrichtung derart ausgebildet ist, dass die Auflageeinrichtung formschlüssig in der Halteeinrichtung aufgenommen werden kann, wobei vorzugsweise die Halteeinrichtung ausgebildet ist, um die Auflageeinrichtung derart formschlüssig in der Halteeinrichtung aufzunehmen, dass die Auflageeinrichtung bezüglich des ersten Befestigungselements einen einfachen translatorischen Freiheitsgrad, insbesondere einen einfachen translatorischen Freiheitsgrad, der im Wesentlichen parallel zur Montagerichtung verläuft, aufweist.

Diese Ausgestaltung ermöglicht ein einfaches und sicheres Einführen der Auflageeinrichtung bei gleichzeitiger sicherer Aufnahme der Auflageeinrichtung in der Halteeinrichtung.

Bevorzugterweise sind die Auflageeinrichtung und die Entriegelungseinrichtung in ein Werkzeug integriert.

Vorzugsweise umfasst die Befestigungsvorrichtung eine Auflageeinrichtung, die geeignet ist, zur Bildung einer Auflagefläche durch eine Bewegung der Auflageeinrichtung in Montagerichtung in der Halteeinrichtung formschlüssig aufgenommen zu werden.

Dabei dient vorzugsweise die Auflagefläche zur Auflage der Trägeranordnung in der Verkabelungsposition.

In einer bevorzugten Ausgestaltung ist die Halteeinrichtung durch wenigstens eine Halteausnehmung gebildet. Vorzugsweise umfasst die Halteeinrichtung eine zentrale Halteausnehmung und wenigstens eine seitliche Halteausnehmung.

Die Erfindung betrifft ferner eine Türkommunikationseinrichtung umfassend eine Trägeranordnung, ein Einbaugehäuse und wenigstens eine erfindungsgemäße Befestigungsvorrichtung.

Einzelheiten und weitere Vorteile der erfindungsgemäßen Vorrichtung und des erfindungsgemäßen Verfahrens werden anhand des nachfolgend beschriebenen Ausführungsbeispiels erläutert. Dabei veranschaulichen im Einzelnen:
Fig. 1: eine perspektivische Ansicht eines ersten Befestigungselements einer Befestigungsvorrichtung gemäß dem Ausführungsbeispiel;
Fig. 2: eine perspektivische Vorderansicht einer beispielhaften Türkommunikationseinrichtung gemäß dem Ausführungsbeispiel;
Fig. 3: eine perspektivische Ansicht eines Einbaugehäuses gemäß dem Ausführungsbeispiel;
Fig. 4: eine perspektivische Rückansicht der Türkommunikationseinrichtung gemäß dem Ausführungsbeispiel;
Fig. 5: eine perspektivische Vorderansicht einer weiteren beispielhaften Türkommunikationseinrichtung gemäß dem Ausführungsbeispiel;
Fig. 6: eine perspektivische Vorderansicht einer weiteren beispielhaften Türkommunikationseinrichtung gemäß dem Ausführungsbeispiel;
Fig. 7: eine seitliche Ansicht der Türkommunikationseinrichtung gemäß dem Ausführungsbeispiel in einer Verkabelungsposition;

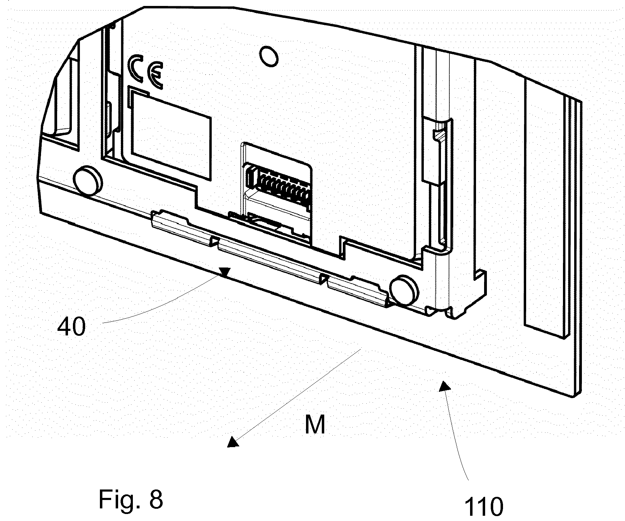

Fig. 8: eine perspektivische Teilansicht der Türkommunikationseinrichtung gemäß dem Ausführungsbeispiel;
Fig. 9: eine perspektivische Teilansicht der Türkommunikationseinrichtung gemäß dem Ausführungsbeispiel;
Fig. 10: eine perspektivische Teilansicht der Türkommunikationseinrichtung mit einer Entriegelungseinrichtung gemäß dem Ausführungsbeispiel;
Fig. 11: eine perspektivische Teilansicht des an einer Befestigungsfläche festgelegten ersten Befestigungselements in einer Minimalposition gemäß dem Ausführungsbeispiel;
Fig. 12: eine perspektivische Teilansicht des an der Befestigungsfläche festgelegten ersten Befestigungselements in einer Maximalposition gemäß dem Ausführungsbeispiel;
Fig. 13: eine perspektivische Ansicht des ersten Befestigungselements der Befestigungsvorrichtung gemäß dem Ausführungsbeispiel;
Fig. 14: eine perspektivische Teilansicht des an der Befestigungsfläche festgelegten ersten Befestigungselements mit der Entriegelungseinrichtung gemäß dem Ausführungsbeispiel;
Fig. 15: eine perspektivische Teilansicht des an der Befestigungsfläche festgelegten ersten Befestigungselements mit einer Auflageeinrichtung gemäß dem Ausführungsbeispiel;

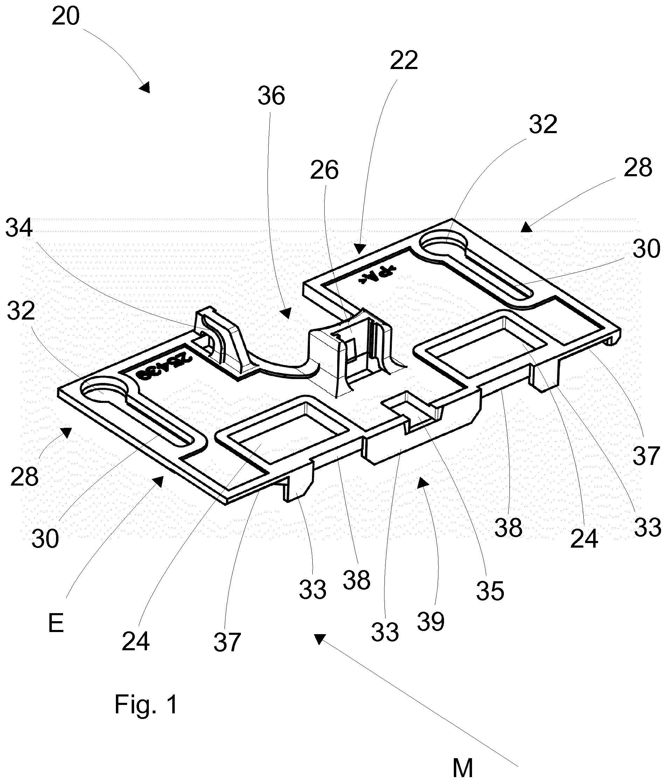

Fig. 1 zeigt ein erstes Befestigungselement 20 einer Befestigungsvorrichtung 10 gemäß der Erfindung. Das erste Befestigungselement 20 umfasst eine im Wesentlichen flächig ausgebildete Basis 22. Die Basis 22 ist an einer Befestigungsfläche 122, 126, 128 eines Einbaugehäuses 120 festlegbar. Die Befestigungsvorrichtung 10 dient zum Festlegen einer Trägeranordnung 110 einer Türkommunikationseinrichtung 100 in dem Einbaugehäuse 120.

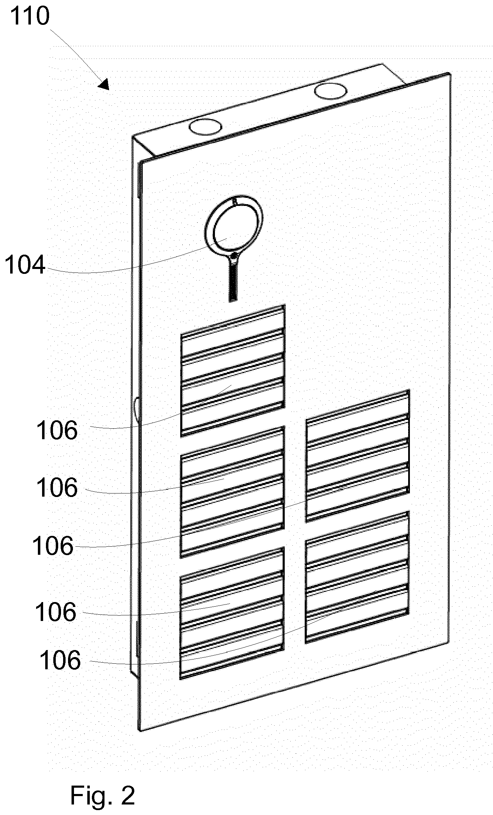

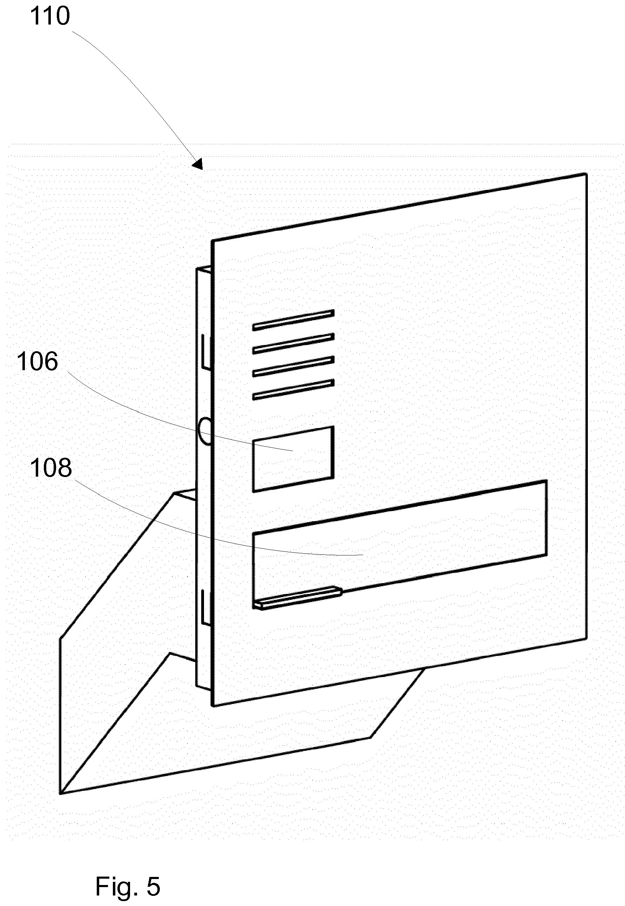

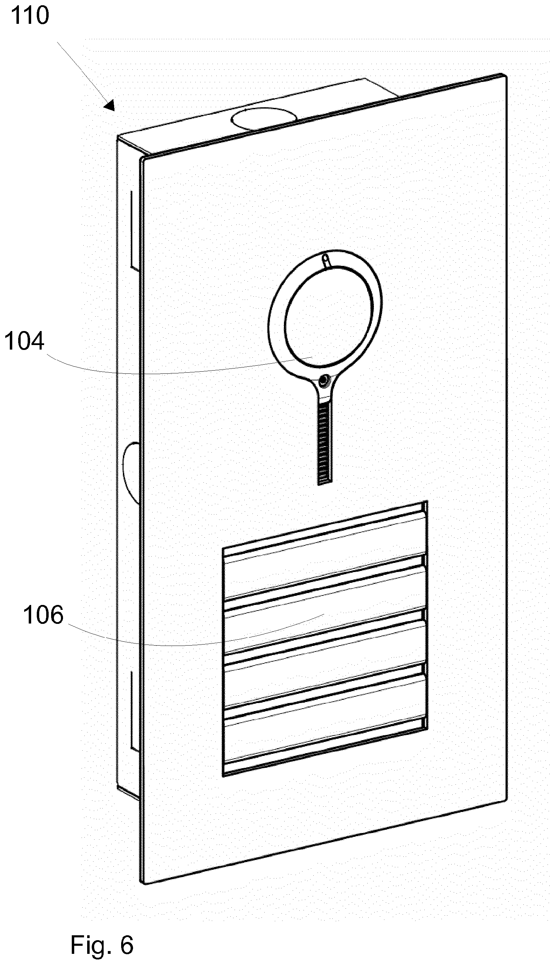

Wie insbesondere in den Fign. 2, 5 und 6 zu erkennen geben, kann die Türkommunikationseinrichtung 100 verschiedene Module 104, 106, 108 umfassen, beispielsweise ein Kameramodul 104 eine Tastenmodul 106 und/oder eine Briefkastenmodul 108.

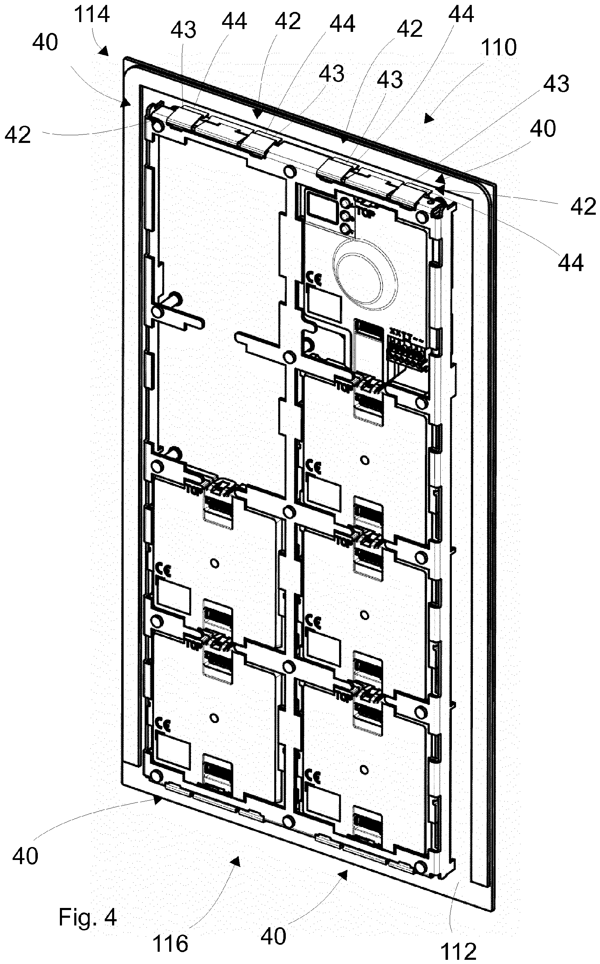

Wie insbesondere in den Fign. 4, 9 und 10 gezeigt, umfasst die Befestigungsvorrichtung 10 ein zweites Befestigungselement 40, welches an der Trägeranordnung 110 festlegbar ist und welches zur Befestigung der Trägeranordnung 110 in dem Einbaugehäuse 120 durch Verschieben des zweiten Befestigungselements 40 in einer Montagerichtung M mit dem ersten Befestigungselement 20 verbindbar ist. Die Basis 22 erstreckt sich im Wesentlichen entlang einer parallel zur Montagerichtung M verlaufenden Ebene E. Das erste Befestigungselement 20 weist wenigstens eine Vertiefung 24 und das zweite Befestigungselement 40 wenigstens einen Vorsprung 42 auf. Der Vorsprung 42 greift zur Verbindung des ersten Befestigungselements 20 mit dem zweiten Befestigungselement 40 in die Vertiefung 24 formschlüssig ein.

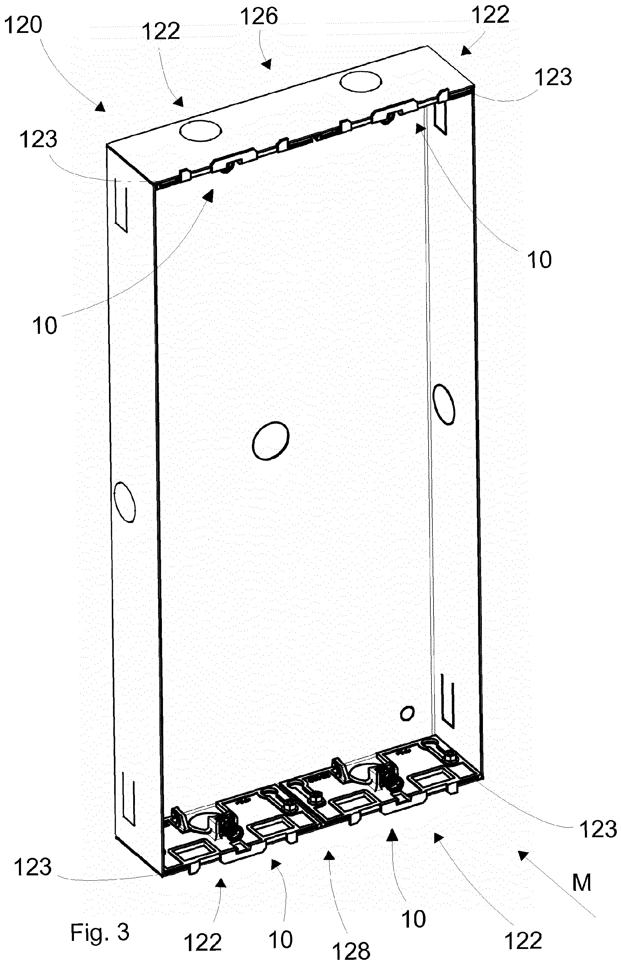

Wie insbesondere Fig. 3 zeigt, umfasst das Einbaugehäuse 120 nach dem Ausführungsbeispiel eine obere Befestigungsfläche 126 und eine untere Befestigungsfläche 128, an denen jeweils zwei erste Befestigungselemente 20 einer erfindungsgemäßen Befestigungsvorrichtung 10 befestigt sind. Wie insbesondere Fig. 4 zu erkennen gibt, sind entsprechend jeweils an einer Oberseite 114 und einer Unterseite 116 der Trägeranordnung 110 zwei zweite Befestigungselemente 40 angeordnet.

Das erste Befestigungselement 20 weist eine Aufnahmeeinrichtung 26 zur Aufnahme einer in Montagerichtung M komprimierbaren Entriegelungsfeder 27 auf, wobei durch die Entriegelungsfeder 27 eine Entriegelungkraft entgegen der Montagerichtung M auf die Trägeranordnung 110 ausübbar ist. Vorzugsweise umfasst das erste Befestigungselement 20 eine solche Entriegelungsfeder 27.

Vorzugsweise verläuft die Montagerrichtung M orthogonal zu einer Ebene, in welcher eine Einbauöffnung des Einbaugehäuses 120 liegt. Die Einbauöffnung dient zur zumindest teilweisen Aufnahme der Trägeranordnung 110.

Vorzugsweise ist die Entriegelungsfeder 27 als Druckfeder, insbesondere als Spiraldruckfeder ausgebildet.

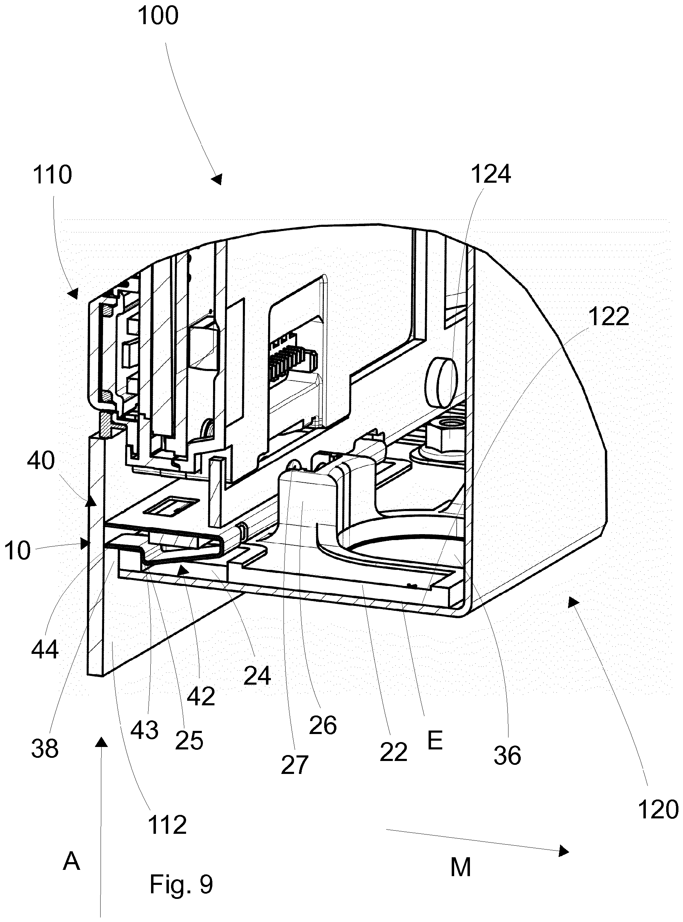

Gemäß dem Ausführungsbeispiel weist das erste Befestigungselement 20 zwei Vertiefungen 24 auf, die einen im Wesentlichen rechteckförmigen Querschnitt aufweisen. Das zweite Befestigungselement 40 gemäß dem Ausführungsbeispiel umfasst zwei Vorsprünge 42, die, wie insbesondere in Fig. 9 gezeigt, jeweils in die Vertiefungen 24 eingreifen.

Das erste Befestigungselement umfasst ferner einen Haken 34, der zur Aufnahme eines Haltebandes 60 dient. Der Haken 34 ist an der Basis 22 angeordnet.

Die Vertiefungen 24 weisen eine erste Rastfläche 25 und die Vorsprünge 42 eine zweite Rastfläche 43 auf, wobei zur Verbindung des ersten Befestigungselements 20 mit dem zweiten Befestigungselement 40 die erste Rastefläche 25 auf der zweiten Rastfläche 43 aufliegt. Die erste Rastfläche 25 und die zweite Rastfläche 43 erstrecken sich im Wesentlichen quer zur Montagerichtung M. Die erste Rastfläche 25 und die zweite Rastfläche 43 erstrecken sich zudem im Wesentlichen quer zur Richtung, in welcher die Entriegelungskraft wirkt.

Das zweite Befestigungselement 40 umfasst zwei jeweils mit einem Vorsprung 42 verbundene Entriegelungsflächen 44, die sich vorzugsweise parallel zur Ebene E erstrecken.

Das erste Befestigungselement 20 umfasst zwei Entriegelungsausnehmungen 38 zur Durchführung einer Entriegelungseinrichtung 70 in einer quer zur Ebene E verlaufenden Entriegelungsrichtung A, wobei vorzugsweise die Entriegelungsausnehmung 38 benachbart zur Vertiefung 24 angeordnet ist.

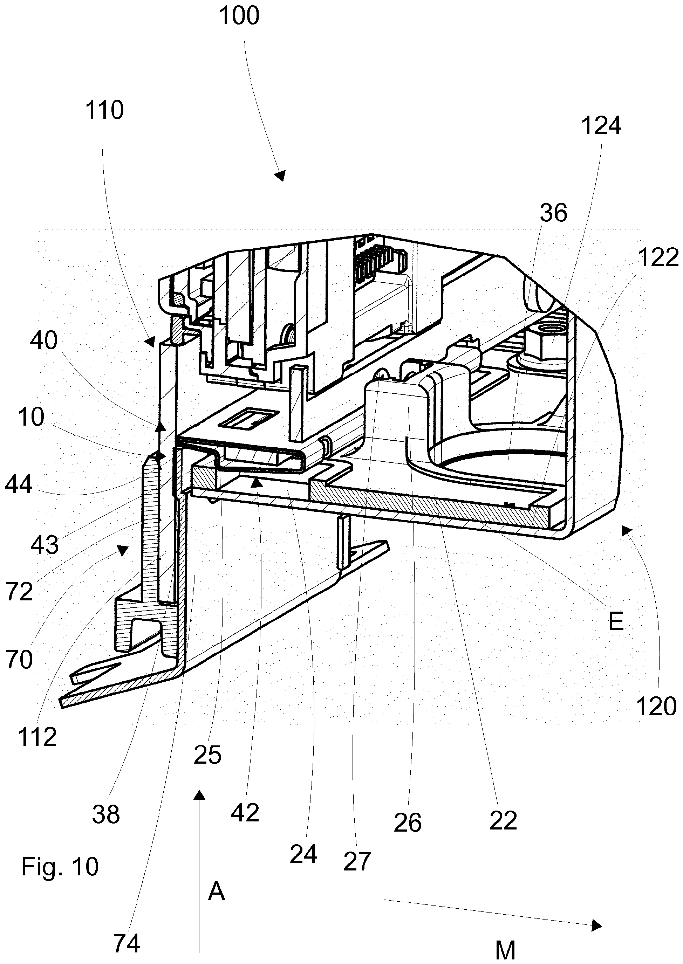

Wie insbesondere in Fig. 10 gezeigt, ist die Entriegelungseinrichtung 70 geeignet, in Entriegelungsrichtung A zumindest teilweise durch die Entriegelungsausnehmung 38 geführt zu werden, um zur Lösung der Verbindung zwischen dem ersten Befestigungselement 20 und dem zweiten Befestigungselement 40 eine Kraft auf den Vorsprung 42 und/oder die Entriegelungsfläche 44 auszuüben.

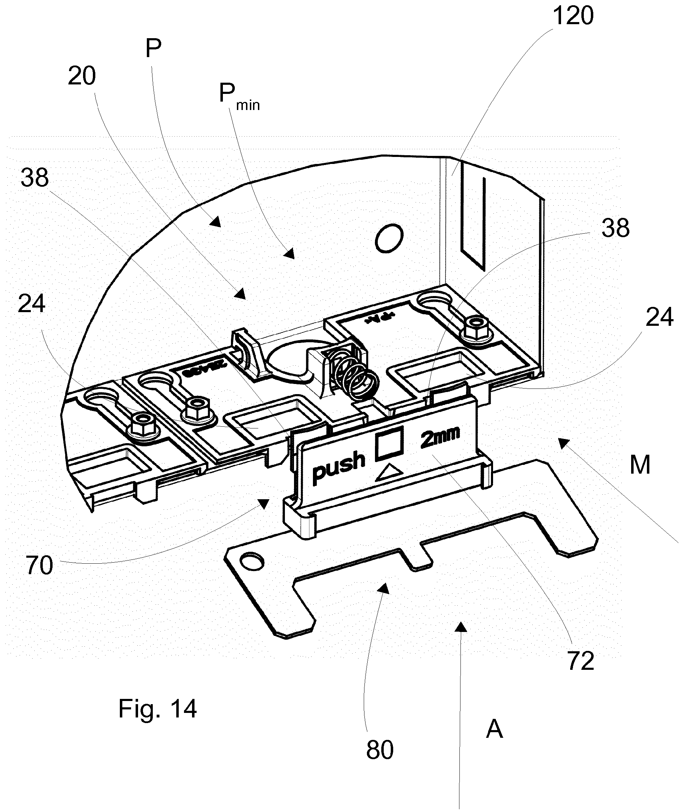

Wie insbesondere die Fign. 10 und 14 zu erkennen geben, kann die Entriegelungseinrichtung 70 einen Entriegelungsabschnitt 74 umfassen. Die Entriegelungseinrichtung 70 kann ferner einen Führungsabschnitt 72 aufweisen. Vorzugsweise verlaufen der Führungsabschnitt 72 und der Entriegelungsabschnitt 74 annähernd parallel zueinander sowie parallel zur Entriegelungsrichtung A. Der Führungsabschnitt 72 und der Entriegelungsabschnitt 74 sind vorzugsweise derart angeordnet, dass beim Entriegeln des zweiten Befestigungselements 40 von dem ersten Befestigungselement 20 zwischen dem Führungsabschnitt 72 und dem Entriegelungsabschnitt 74 eine sich quer zur Montagerichtung M erstreckende Frontpartie 112 der Trägeranordnung 110 verläuft. Der Führungsabschnitt 72 und de Entriegelungsabschnitt 74 ermöglichen ein Führen der Entriegelungseinrichtung 70 entlang der Frontpartie 112 in Entriegelungsrichtung A.

Die Trägeranordnung 110 wird von dem Einbaugehäuse 120 gelöst, indem für jede Befestigungsvorrichtung 10 die Entriegelungseinrichtung 70 in Entriegelungsrichtung A durch die Entriegelungsausnehmung 38 geführt wird und durch die Entriegelungseinrichtung 70 eine Kraft auf die Entriegelungsfläche 44 ausgeübt wird. Dadurch wird der Vorsprung 42 aus der Vertiefung 24 gedrückt und die erste Rastfläche 25 von der zweiten Rastfläche 43 gelöst. Anschließend lässt die durch die Entriegelungsfeder 27 auf die Trägeranordnung 110 ausgeübte Entriegelungskraft die Trägeranordnung 110 entgegen der Montagerichtung M aus dem Einbaugehäuse 120 schnellen.

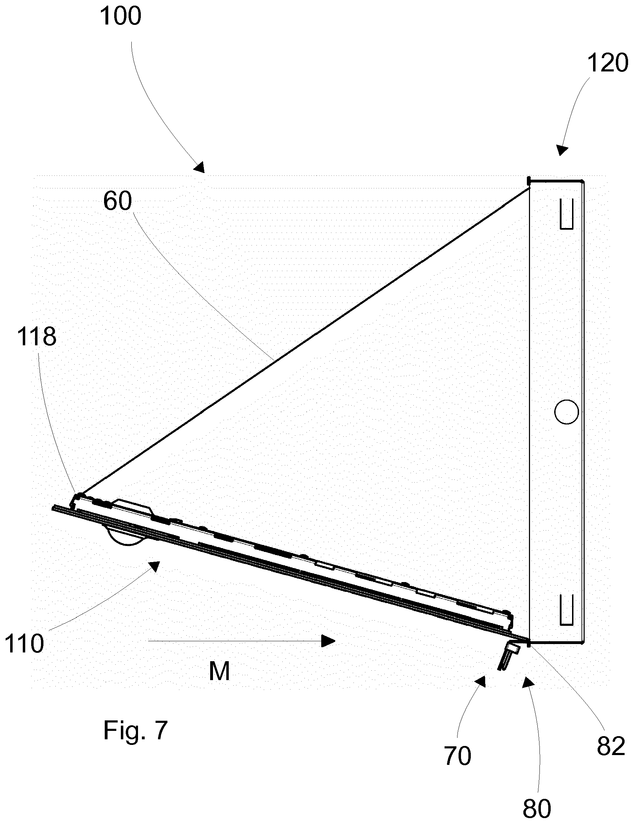

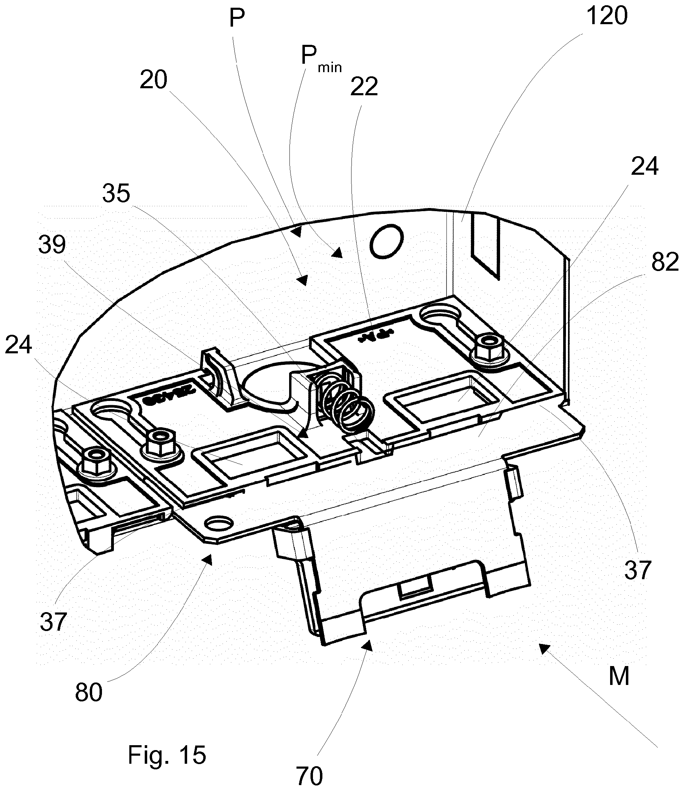

Wie insbesondere die Fign. 7 und 15 zu erkennen geben, umfasst das erste Befestigungselement 20 eine Halteeinrichtung 39 zur formschlüssigen Aufnahme einer Auflageeinrichtung 80, wobei die Halteeinrichtung 39 derart ausgebildet ist, dass die Auflageeinrichtung 80 formschlüssig in der Halteeinrichtung 39 aufgenommen werden kann, wobei vorzugsweise die Halteeinrichtung 39 ausgebildet ist, um die Auflageeinrichtung 80 derart formschlüssig in der Halteeinrichtung 39 aufzunehmen, dass die Auflageeinrichtung 80 bezüglich des ersten Befestigungselements 20 einen einfachen translatorischen Freiheitsgrad, insbesondere einen einfachen translatorischen Freiheitsgrad, der im Wesentlichen parallel zur Montagerichtung M verläuft, aufweist.

Vorzugsweise umfasst die Befestigungsvorrichtung eine Auflageeinrichtung 80, die geeignet ist, zur Bildung einer Auflagefläche 82 durch eine Bewegung der Auflageeinrichtung 80 in Montagerichtung M in der Halteeinrichtung 39 formschlüssig aufgenommen zu werden. Wie insbesondere Fig. 7 zu erkennen gibt, kann dadurch in einfacher Weise eine Auflagefläche 82 gebildet werden, auf welcher die Unterseite 116 der Trägeranordnung 110 in der Verkabelungsposition aufliegt, wenn die Auflageeinrichtung 80 in der Halteeinrichtung 39 des an der unteren Befestigungsfläche 128 befestigten ersten Befestigungselements 20 aufgenommen ist. Vorzugsweise ist das Halteband 60 mit dem Haken 34 des an der oberen Befestigungsfläche 126 befestigten ersten Befestigungselements 20 und mit einer Halterung 118 der Trägeranordnung 110 verbunden.

Gemäß den Ausführungsbeispiel ist die Halteeinrichtung 39 durch wenigstens drei Halteausnehmungen 35, 37 gebildet. Vorzugsweise umfasst die Halteeinrichtung 39 eine zentrale Halteausnehmung 35 und zwei seitliche Halteausnehmungen 37.

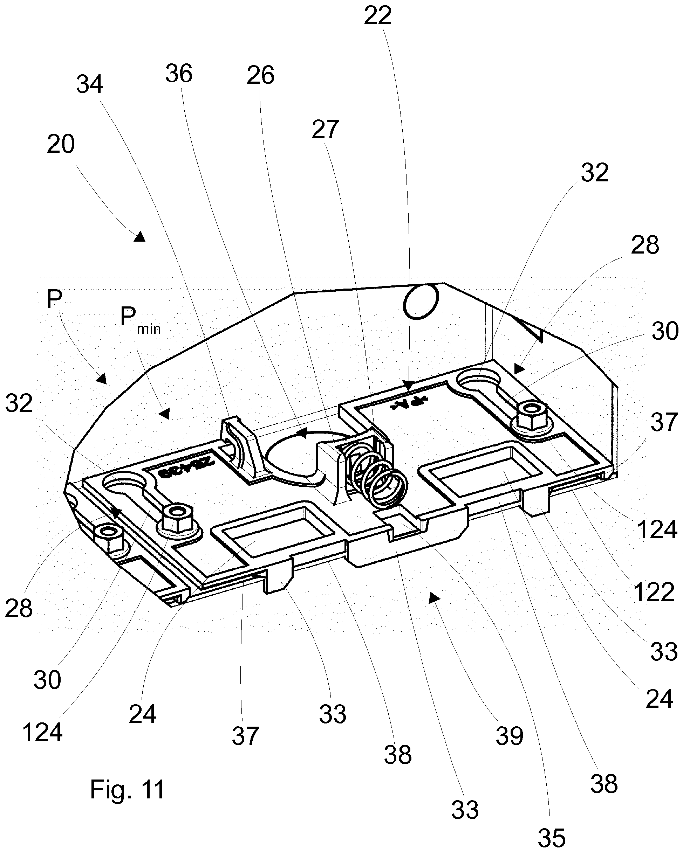

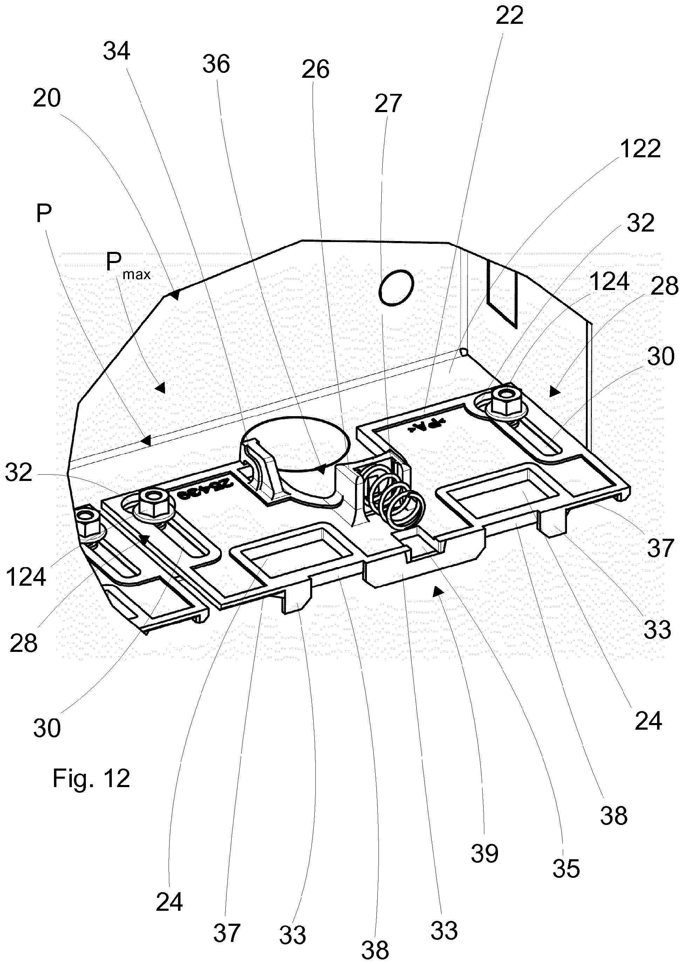

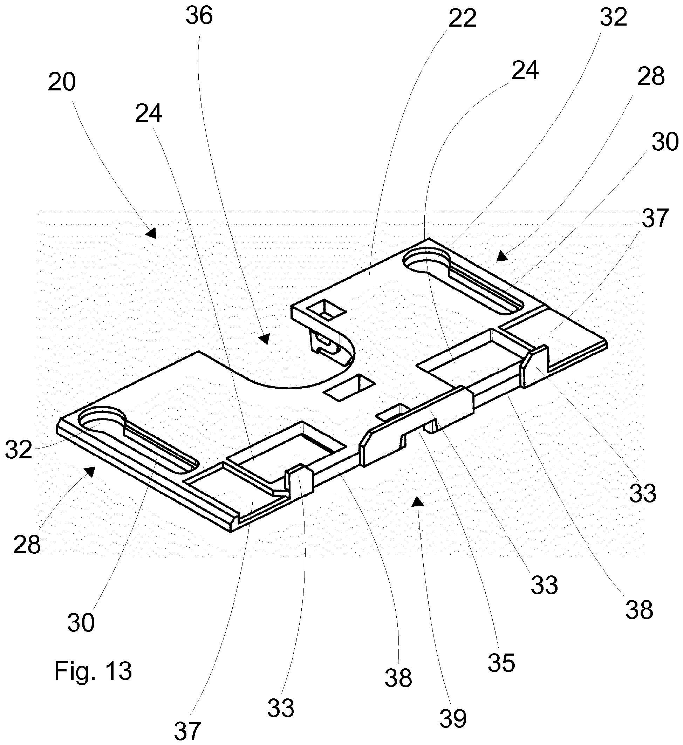

Insbesondere aus den Fign. 11 bis 15 ist ersichtlich, dass das erste Befestigungselement 20 eine Aussparung 36 zur Durchführung von elektrischen Leitungen der Türkommunikationseinrichtung 100 umfasst.

Das erste Befestigungselement 20 weist zwei Festlegeabschnitte 28 auf, die an der Basis angeordnet 22 sind und mittels derer das erste Befestigungselement 20 an der Befestigungsfläche 122 126, 128 in einer Festlegeposition P formschlüssig und/oder kraftschlüssig festlegbar ist. Die Festlegeposition P ist zwischen einer Minimalposition Pₘᵢₙ und einer Maximalposition Pₘₐₓ entlang einer parallel zur Montagerichtung M verlaufenden Achse stufenlos wählbar.

Insbesondere aus den Fign. 11, 12, 14 und 15 ist ersichtlich, dass das erste Befestigungselement 20 vorzugsweise mittels zweier Festlegungselemente 124 formschlüssig und/oder kraftschlüssig mit der Befestigungsfläche 122, 126, 128 verbunden ist. Vorzugsweise ist das Festlegungselement 124 als Schraube mit Mutter ausgebildet.

Der Festlegeabschnitt 28 umfasst ein sich im Wesentlichen entlang der Montagerichtung M erstreckendes Langloch 30. Das Festlegungselement 124 erstreckt sich quer zur Montagerichtung M durch das Langloch 30 hindurch.

Der Festlegeabschnitt 28 umfasst wenigstens eine Durchführungsöffnung 32, in welche das Langloch 30 mündet. Durch die Durchführungsöffnung 32 kann das Festlegungselement 124, insbesondere ein Kopf der Schraube und/oder die Mutter zumindest teilweise durchgeführt werden, um das erste Befestigungselement 20 an der Befestigungsfläche 122, 128 zu verbinden oder das Befestigungselement 20 von der Befestigungsfläche 122, 126, 128 zu lösen.

Vorzugsweise ist das Langloch 30 und/oder die Durchführungsöffnung 32 an der Basis 22 angeordnet.

Das erste Befestigungselement 20 umfasst drei Montageanschläge 33, die an eine Kante 123 der Befestigungsfläche 122, 126, 128 anlegbar sind, wenn die Festlegeposition P an der Minimalposition Pₘᵢₙ gewählt ist.

Durch die Ausgestaltung der Festlegeabschnitte 28 kann die Festlegeposition P in einfacher Weise gewählt werden, um einen Putzausgleich zu erreichen, wenn das Einbaugehäuse 120 für eine Unterputz-Verlegung vorgesehen ist.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Befestigungsvorrichtung zum Festlegen einer Trägeranordnung (110) einer Türkommunikationseinrichtung (100) in einem Einbaugehäuse (120), umfassend:
ein erstes Befestigungselement (20), welches eine im Wesentlichen flächig ausgebildete Basis (22) aufweist und an einer Befestigungsfläche (122, 126, 128) des Einbaugehäuses (120) festlegbar ist, und
ein zweites Befestigungselement (40), welches an der Trägeranordnung (110) festlegbar ist und welches zur Befestigung der Trägeranordnung (110) in dem Einbaugehäuse (120) durch Verschieben des zweiten Befestigungselements (40) in einer Montagerichtung (M) mit dem ersten Befestigungselement (20) verbindbar ist,
wobei sich die Basis (22) im Wesentlichen entlang einer parallel zur Montagerichtung verlaufenden Ebene (E) erstreckt und
wobei das erste Befestigungselement (20) wenigstens eine Vertiefung (24) aufweist und das zweite Befestigungselement (40) wenigstens einen Vorsprung (42) umfasst, der zur Verbindung des ersten Befestigungselements (20) mit dem zweiten Befestigungselement (40) in die Vertiefung (24) formschlüssig eingreift,
**dadurch gekennzeichnet, dass**
das erste Befestigungselement (20) wenigstens eine Aufnahmeeinrichtung (26) zur Aufnahme einer in Montagerichtung (M) komprimierbaren Entriegelungsfeder (27) aufweist, wobei durch die Entriegelungsfeder (27) eine Entriegelungkraft entgegen der Montagerichtung (M) auf die Trägeranordnung (110) ausübbar ist,
wobei das erste Befestigungselement (20) wenigstens eine Halteeinrichtung (39) zur formschlüssigen Aufnahme einer Auflageeinrichtung (80) umfasst und wobei die Halteeinrichtung (39) derart ausgebildet ist, dass die Auflageeinrichtung (80) formschlüssig in der Halteeinrichtung (39) aufgenommen werden kann.

2. Befestigungsvorrichtung nach Anspruch 1, **dadurch gekennzeichnet, dass** das erste Befestigungselement (20) wenigstens einen Festlegeabschnitt (28) aufweist, der an der Basis (22) angeordnet ist und mittels dem das erste Befestigungselement (20) an der Befestigungsfläche (122, 126, 128) in einer Festlegeposition (P) formschlüssig und/oder kraftschlüssig festlegbar ist, wobei die Festlegeposition (P) zwischen einer Minimalposition (Pₘᵢₙ) und einer Maximalposition (Pₘₐₓ) entlang einer parallel zur Montagerichtung (M) verlaufenden Achse stufenlos wählbar ist.

3. Befestigungsvorrichtung nach Anspruch 2, **dadurch gekennzeichnet, dass** der Festlegeabschnitt (28) ein sich im Wesentlichen entlang der Montagerichtung (M) erstreckendes Langloch (30) umfasst.

4. Befestigungsvorrichtung nach einem der Ansprüche 2 oder 3, **dadurch gekennzeichnet, dass** der Festlegeabschnitt (28) wenigstens eine Durchführungsöffnung (32) umfasst, in welche vorzugsweise das Langloch (30) mündet.

5. Befestigungsvorrichtung nach einem der Ansprüche 1 bis 4, **dadurch gekennzeichnet, dass** die Vertiefung (24) wenigstens eine erste Rastfläche (25) und der Vorsprung (42) wenigstens eine zweite Rastfläche (43) aufweist, wobei zur Verbindung des ersten Befestigungselements (20) mit dem zweiten Befestigungselement (40) die erste Rastefläche (25) auf der zweiten Rastfläche (43) aufliegt, wobei vorzugsweise sich die erste Rastfläche (25) und die zweite Rastfläche (43) im Wesentlichen quer zur Montagerichtung (M) erstrecken.

6. Befestigungsvorrichtung nach einem der Ansprüche 1 bis 5, **dadurch gekennzeichnet, dass** das erste Befestigungselement (20) wenigstens einen Haken (34) zur Aufnahme eines mit einer Halterung der Trägeranordnung verbindbaren Haltebandes (60) aufweist, wobei vorzugsweise der Haken (34) an der Basis (22) angeordnet ist.

7. Befestigungsvorrichtung nach einem der Ansprüche 1 bis 6, **dadurch gekennzeichnet, dass** das zweite Befestigungselement (40) wenigstens eine mit dem Vorsprung (42) verbundene Entriegelungsfläche (44) umfasst, die sich vorzugsweise parallel zur Ebene (E) erstreckt.

8. Befestigungsvorrichtung nach einem der Ansprüche 1 bis 7, **dadurch gekennzeichnet, dass** das erste Befestigungselement (20) wenigstens eine Aussparung (36) zur Durchführung von elektrischen Leitungen der Türkommunikationseinrichtung (100) umfasst.

9. Befestigungsvorrichtung nach einem der Ansprüche 1 bis 8, **dadurch gekennzeichnet, dass** das erste Befestigungselement (20) wenigstens einen Montageanschlag (33) umfasst, der an eine Kante (123) der Befestigungsfläche (122, 126, 128) anlegbar ist, wenn die Festlegeposition (P) an der Minimalposition (Pₘᵢₙ) gewählt ist.

10. Befestigungsvorrichtung nach einem der Ansprüche 1 bis 9, **dadurch gekennzeichnet, dass** das erste Befestigungselement (20) wenigstens eine Entriegelungsausnehmung (38) zur Durchführung einer Entriegelungseinrichtung (70) in einer quer zur Ebene (E) verlaufenden Entriegelungsrichtung (A) umfasst, wobei vorzugsweise die Entriegelungsausnehmung (38) benachbart zur Vertiefung (24) angeordnet ist.

11. Befestigungsvorrichtung nach Anspruch 10, **gekennzeichnet durch** eine Entriegelungseinrichtung (70), die geeignet ist, in Entriegelungsrichtung (A) zumindest teilweise durch die Entriegelungsausnehmung (38) geführt zu werden, um zur Lösung der Verbindung zwischen dem ersten Befestigungselement (20) und dem zweiten Befestigungselement (40) eine Kraft auf den Vorsprung (42) und/oder die Entriegelungsfläche (44) auszuüben.

12. Befestigungsvorrichtung nach einem der Ansprüche 1 bis 11, **dadurch gekennzeichnet, dass** die Halteeinrichtung (39) ausgebildet ist, um die Auflageeinrichtung (80) derart formschlüssig in der Halteeinrichtung (39) aufzunehmen, dass die Auflageeinrichtung (80) bezüglich des ersten Befestigungselements (20) einen einfachen translatorischen Freiheitsgrad, insbesondere einen einfachen translatorischen Freiheitsgrad, der im Wesentlichen parallel zur Montagerichtung (M) verläuft, aufweist.

13. Befestigungsvorrichtung nach Anspruch 12, **gekennzeichnet durch** eine Auflageeinrichtung (80), die geeignet ist, zur Bildung einer Auflagefläche (82) durch eine Bewegung der Auflageeinrichtung (80) in Montagerichtung (M) in der Halteeinrichtung (39) formschlüssig aufgenommen zu werden.

14. Türkommunikationseinrichtung umfassend eine Trägeranordnung (110), ein Einbaugehäuse (120) und wenigstens eine Befestigungsvorrichtung (10) nach einem der Ansprüche 1 bis 13, wobei die Trägeranordnung (110) mittels der Befestigungsvorrichtung (10) in dem Einbaugehäuse (120) festgelegt ist.

## Claims

1. A fastening device for securing a support assembly (110) of a door communication device (100) in an installation housing (120), comprising:
a first fastening element (20) which has a substantially flat base (22) and can be secured to a fastening face (122, 126, 128) of the installation housing (120), and
a second fastening element (40) which can be secured to the support assembly (110) and which in order to fasten the support assembly (110) in the installation housing (120) can be connected to the first fastening element (20) by displacing the second fastening element (40) in an assembly direction (M),
wherein the base (22) extends substantially along a plane (E) extending parallel to the assembly direction, and
wherein the first fastening element (20) has at least one indentation (24) and the second fastening element (40) comprises at least one projection (42) which engages in a positive fit in the indentation (24) in order to connect the first fastening element (20) to the second fastening element (40),
**characterised in that**
the first fastening element (20) has at least one receiving means (26) for receiving an unlocking spring (27) which is compressible in the assembly direction (M), with an unlocking force being able to be exerted on the support assembly (110) counter to the assembly direction (M) by means of the unlocking spring (27),
the first fastening element (20) comprising at least one holding means (39) for receiving a supporting means (80) in a positive fit, and wherein the holding means (39) is designed such that the supporting means (80) can be received in a positive fit in the holding means (39).

2. A fastening device according to Claim 1, **characterised in that** the first fastening element (20) has at least one securing portion (28) which is arranged on the base (22) and by means of which the first fastening element (20) can be secured to the fastening face (122, 126, 128) in a securing position (P) in a positive fit and/or in a non-positive fit, the securing position (P) being able to be selected continuously variably between a minimum position (Pₘᵢₙ) and a maximum position (Pₘₐₓ) along an axis extending parallel to the assembly direction (M).

3. A fastening device according to Claim 2, **characterised in that** the securing portion (28) comprises an elongate hole (30) which extends substantially along the assembly direction (M).

4. A fastening device according to one of Claims 2 or 3, **characterised in that** the securing portion (28) comprises at least one passage opening (32) into which preferably the elongate hole (30) opens.

5. A fastening device according to one of Claims 1 to 4, **characterised in that** the indentation (24) has at least a first latching face (25) and the projection (42) has at least a second latching face (43), with the first latching face (25) lying on the second latching face (43) in order to connect the first fastening element (20) to the second fastening element (40), with preferably the first latching face (25) and the second latching face (43) extending substantially transversely to the assembly direction (M).

6. A fastening device according to one of Claims 1 to 5, **characterised in that** the first fastening element (20) has at least one hook (34) for receiving a holding strip (60) which can be connected to a holding means of the support assembly, with preferably the hook (34) being arranged on the base (22).

7. A fastening device according to one of Claims 1 to 6, **characterised in that** the second fastening element (40) comprises at least one unlocking face (44) connected to the projection (42), which face preferably extends parallel to the plane (E).

8. A fastening device according to one of Claims 1 to 7, **characterised in that** the first fastening element (20) comprises at least one cutout (36) in order to lead through electric lines of the door communication device (100).

9. A fastening device according to one of Claims 1 to 8, **characterised in that** the first fastening element (20) comprises at least one assembly stop (33) which can be placed against an edge (123) of the fastening face (122, 126, 128) if the securing position (P) is selected at the minimum position (Pₘᵢₙ).

10. A fastening device according to one of Claims 1 to 9, **characterised in that** the first fastening element (20) comprises at least one unlocking recess (38) in order to lead through an unlocking means (70) in an unlocking direction (A) extending transversely to the plane (E), with preferably the unlocking recess (38) being arranged adjacent to the indentation (24).

11. A fastening device according to Claim 10, **characterised by** an unlocking means (70) which is suitable for being guided in the unlocking direction (A) at least partially through the unlocking recess (38), in order to exert a force on the projection (42) and/or the unlocking face (44) to release the connection between the first fastening element (20) and the second fastening element (40).

12. A fastening device according to one of Claims 1 to 11, **characterised in that** the holding means (39) is designed in order to receive the supporting means (80) in a positive fit in the holding means (39) such that the supporting means (80) has a single translational degree of freedom with respect to the first fastening element (20), in particular a single translational degree of freedom which runs substantially parallel to the assembly direction (M).

13. A fastening device according to Claim 12, **characterised by** a contact means (80) which is suitable to be received in a positive fit in the holding means (39) in order to form a contact surface (82) by a movement of the contact means (80) in the assembly direction (M).

14. A door communication device comprising a support assembly (110), an installation housing (120) and at least one fastening device (10) according to one of Claims 1 to 13, wherein the support assembly (110) is secured in the installation housing (120) by means of the fastening device (10).

## Revendications

1. Dispositif de fixation pour fixer un agencement de support (110) d'un équipement de communication de porte (100) dans un boîtier de montage (120), comprenant :
un premier élément de fixation (20) qui présente une base (22) sensiblement plane et peut être fixé sur une surface de fixation (122, 126, 128) du boîtier de montage (120), et
un deuxième élément de fixation (40) qui peut être fixé sur l'agencement de support (110) et qui peut être relié au premier élément de fixation (20) pour fixer l'agencement de support (110) dans le boîtier de montage (120) par déplacement du deuxième élément de fixation (40) dans une direction de montage (M),
dans lequel la base (22) s'étend sensiblement le long d'un plan (E) s'étendant parallèlement à la direction de montage et
dans lequel le premier élément de fixation (20) présente au moins un renfoncement (24) et le deuxième élément de fixation (40) comprend au moins une saillie (42) qui s'engage par complémentarité de forme dans le renfoncement (24) pour relier le premier élément de fixation (20) au deuxième élément de fixation (40),
**caractérisé en ce que**
le premier élément de fixation (20) présente au moins un moyen de réception (26) pour recevoir un ressort de déverrouillage (27) compressible dans la direction de montage (M), lequel ressort de déverrouillage (27) peut exercer sur l'agencement de support (110) une force de déverrouillage à l'encontre de la direction de montage (M),
le premier élément de fixation (20) comprenant au moins un moyen de retenue (39) pour recevoir par complémentarité de forme un moyen d'appui (80) et le moyen de retenue (39) étant configuré de telle sorte que le moyen d'appui (80) peut être reçu par complémentarité de forme dans le moyen de retenue (39).

2. Dispositif de fixation selon la revendication 1, **caractérisé en ce que** le premier élément de fixation (20) présente au moins une partie de fixation (28) qui est disposée sur la base (22) et au moyen de laquelle le premier élément de fixation (20) peut être fixé par complémentarité de forme et/ou à force sur la surface de fixation (122, 126, 128) dans une position de fixation (P), la position de fixation (P) étant réglable en continu entre une position minimale (Pₘᵢₙ) et une position maximale (Pₘₐₓ) le long d'un axe s'étendant parallèlement à la direction de montage (M).

3. Dispositif de fixation selon la revendication 2, **caractérisé en ce que** la partie de fixation (28) comprend un trou oblong (30) s'étendant sensiblement le long de la direction de montage (M).

4. Dispositif de fixation selon l'une des revendications 2 ou 3, **caractérisé en ce que** la partie de fixation (28) comprend au moins une ouverture traversante (32) dans laquelle débouche de préférence le trou oblong (30).

5. Dispositif de fixation selon l'une des revendications 1 à 4, **caractérisé en ce que** le renfoncement (24) présente au moins une première surface d'encliquetage (25) et la saillie (42) au moins une deuxième surface d'encliquetage (43), dans lequel, pour relier le premier élément de fixation (20) au deuxième élément de fixation (40), la première surface d'encliquetage (25) porte sur la deuxième surface d'encliquetage (43), la première surface d'encliquetage (25) et la deuxième surface d'encliquetage (43) s'étendant de préférence sensiblement transversalement à la direction de montage (M).

6. Dispositif de fixation selon l'une des revendications 1 à 5, **caractérisé en ce que** le premier élément de fixation (20) présente au moins un crochet (34) pour recevoir une sangle de retenue (60) pouvant être reliée à un élément de retenue de l'agencement de support, le crochet (34) étant de préférence disposé sur la base (22).

7. Dispositif de fixation selon l'une des revendications 1 à 6, **caractérisé en ce que** le deuxième élément de fixation (40) comprend au moins une surface de déverrouillage (44) reliée à la saillie (42), qui s'étend de préférence parallèlement au plan (E).

8. Dispositif de fixation selon l'une des revendications 1 à 7, **caractérisé en ce que** le premier élément de fixation (20) comprend au moins un évidement (36) pour la traversée de lignes électriques de l'équipement de communication de porte (100).

9. Dispositif de fixation selon l'une des revendications 1 à 8, **caractérisé en ce que** le premier élément de fixation (20) comprend au moins une butée de montage (33) qui peut être appliquée contre un bord (123) de la surface de fixation (122, 126, 128) lorsque la position de fixation (P) est réglée à la position minimale (Pₘᵢₙ).

10. Dispositif de fixation selon l'une des revendications 1 à 9, **caractérisé en ce que** le premier élément de fixation (20) comprend au moins un évidement de déverrouillage (38) pour la traversée d'un moyen de déverrouillage (70) dans une direction de déverrouillage (A) s'étendant transversalement au plan (E), l'évidement de déverrouillage (38) étant de préférence disposé adjacent au renfoncement (24).

11. Dispositif de fixation selon la revendication 10, **caractérisé par** un moyen de déverrouillage (70) qui est adapté à être guidé au moins partiellement à travers l'évidement de déverrouillage (38) dans la direction de déverrouillage (A) pour exercer une force sur la saillie (42) et/ou la surface de déverrouillage (44) pour défaire la liaison entre le premier élément de fixation (20) et le deuxième élément de fixation (40).

12. Dispositif de fixation selon l'une des revendications 1 à 11, **caractérisé en ce que** le moyen de retenue (39) est conçu pour recevoir le moyen d'appui (80) par complémentarité de forme dans le moyen de retenue (39), de telle sorte que le moyen d'appui (80) présente un degré de liberté simple en translation, en particulier un degré de liberté simple en translation qui s'étend sensiblement parallèlement à la direction de montage (M), par rapport au premier élément de fixation (20).

13. Dispositif de fixation selon la revendication 12, **caractérisé par** un moyen d'appui (80) qui, par un déplacement du moyen d'appui (80) dans la direction de montage (M), est adapté à être reçu par complémentarité de forme dans le moyen de retenue (39) pour former une surface d'appui (82).

14. Équipement de communication de porte comprenant un agencement de support (110), un boîtier de montage (120) et au moins un dispositif de fixation (10) selon l'une des revendications 1 à 13, l'agencement de support (110) étant fixé dans le boîtier de montage (120) au moyen du dispositif de fixation (10).
